# EUROPEAN PATENT APPLICATION

(11) **EP 4 636 516 A1**
(43) Date of publication of application: **22.10.2025**
(21) Application number: 24171081.3
(22) Date of filing: 18.04.2024
(51) Int. Cl.: G05B 19/409, G05B 19/4093, B23Q 15/12

(54) **A METHOD OF GENERATING PARAMETERS APPLIED FOR MACHINING A WORKPIECE PERFORMED BY A MACHINE TOOL**

(71) Applicant: GF Machining Solutions AG, 2504 Biel/Bienne (CH)
(72) Inventor: Schneider, Kurt, 2564 Bellmund (CH); Besuchet, Jean-Philippe, 2000 Neuchâtel (CH); Meier, Jonas, 3014 Bern (CH); Monnin, Jérémie, Des Plaines, IL 60016 (US)
(74) Representative: Arend, Christa

(57) **Abstract**

The present invention is related to a method for generating parameters applied for machining operations conducted by a machine tool. The method comprises:
a. providing priority values for at least two mutually dependent target values representing the machining performance comprising accuracy, surface finish, machining time as input data to an extended operator support system (1), wherein at least one priority value is automatically determined by an automatic tuning unit;
b. providing at least one of job attributes comprising complexity and workpiece weight as input data to the extended operator support system;
c. automatically determining cycle parameters, machine parameters and the ancillary module parameters as output data of the extended operator support system based on the priority values and the job attributes by the extended operator support system, wherein the machine parameters and cycle parameters are applied for a primary control unit (2) configured to control the movement of the different axes to perform the machining and the ancillary module parameters are applied for a plurality of ancillary modules which are configured to conduct the operations for supporting the machining.

## Description

### FIELD OF THE INVENTION

The present invention is related to a method for generating parameters applied for machining a workpiece performed by a machine tool. In particular, the present invention is related to an extended operator support unit for generating parameters applied for machining a workpiece performed by a machine tool.

### BACKGROUND OF INVENTION

High performance machine tools require a machine specific configuration of the computer numerical control (CNC) which is tuned before leaving the factory. The factory tuning, however, is a compromise among various target values for optimizing the machining process as it cannot be optimized for a specific machining process. To overcome this deficiency, in some cases more than one predefined tuning configurations may be preinstalled by the factory, which then can be activated as required.

Another approach may make certain tuning parameters available to the operator to be adjusted. However, machine tools are complex mechatronic system with extensive possibility of tuning. Those tuning parameters are usually part of a complex control system that is difficult to interpret, thus, it is very difficult for end user to select optimal parameters to reach the machining specifications defined by the user. Additionally, it can severely damage the machine tool in case they are not set correctly.

Thus, EP 1 308 810 discloses a method for assisting an operator in setting optimized machine parameters and cycle parameters of a milling machine tool. The operator can manually select priority values for at least two mutually dependent target values representing the machining performance. In further, the operator can select job attributes. Based on these selected information, cycle parameters and machine parameters can be automatically determined to be applied in the CNC of the machine tool. This is realized by an operator support system which maps the machine parameters and cycle parameters to the selected information by the operator. By applying this method, the operator can select the parameters which he can easily understand. This has a direct positive impact on the machine parameters and cycle parameters used in the machine tool. Consequently, the machining quality and efficiency can be optimized.

Today, the machine tool must provide more and more additional functions besides the basic machining. For example, monitoring systems are integrated into the machine tool to monitor the machining process for improving part quality, protecting machine tool and optimizing production efficiency. Therefore, besides the basic machine parameters and machine cycles, a large number of other parameters used for such additional functions must also be determined. Determination of such parameters are again a challenging task for the operators. Thus, there is a demand to extend the function of the operator support system disclosed in EP 1 308 810 A1.

### SUMMARY OF THE INVENTION

It is an objective of this invention to provide a method of generating parameters applied for machining a workpiece performed by a machine tool which can optimize the machining process. In particular, it is an objective of the present invention to provide a simplified method for assisting an operator to provide optimized parameters applied for the machining.

According to the present invention, these objectives are achieved through the features of independent claims. In addition, further advantageous embodiments follow from the dependent claims and the description.

In the present invention, a method of generating parameters applied for machining a workpiece performed by a machine tool comprises the steps of : providing priority values for at least two mutually dependent target values representing the machining performance comprising accuracy, surface finish, machining time as input data to an extended operator support system; providing at least one of job attributes comprising complexity and workpiece weight as input data to the extended operator support system; and automatically determining cycle parameters, machine parameters and ancillary module parameters as output data of the extended operator support system based on the selected priority values and the job attributes by the extended operator support system. At least one priority value is automatically determined by an automatic tuning unit. The machine parameters and cycle parameters are applied for a primary control unit configured to control the movement of the different axes to perform the machining and the ancillary module parameters are applied for a plurality of ancillary modules which are configured to conduct the operations for supporting the machining. The ancillary control parameters are not applied for the machining itself but for the extended functions of the machine tool, typically to extend its sensing, actuating or computing capabilities that the primary control unit cannot provide. Applying such extended functions can increase the machine performance by improving the safety, machining precision, productivity and energy efficiency.

Preferably, the target values are extended by including machine protection, production costs, reliability and the energy saving.

The method of the present invention can be applied for any kind of machine tool, such as turning, milling, grinding, laser texturing or electrical discharge machining machine tool, additive manufacturing system.

The target values are usually mutually dependent and cannot always be achieved at the same time. For example, decreasing machining time will normally reduce the machining accuracy. Operating the machine tool in the energy saving modus will mostly increase the machining time. Therefore, the operator is required to select priority values for the target values in order to achieve a compromise among those trade off parameters that is the best possible for a specific machining task.

The present invention provides a method to optimize the machining process by assisting an operator in setting the parameters related to operations of machining the workpiece. The operator has the possibility to select the priority values of different target values which are related to the machining specifications. Additionally, at least one priority can be determined automatically by the automatic tuning module without manual selection of the operator. This provides an improved assistance of the operator. Moreover, the automatically determined priority can enhance the machining performance because it is determined independent on the knowledge and experience of the operator. The automatic determining of the priority can also be used as a verification. The operator can compare the priority values determined by himself and the automatically determined values. This can avoid the wrong decision of the operator and enhance the reliability of the machining.

In addition, a large range of the target values is available. This can further optimize the machining process, since the user has more flexibility to set machining specifications. In particular, the target values include surface finish, machine protection, production costs and energy saving. The user can benefit from these additional target values in aspect of further protecting the machine tool, reducing the costs, increasing machining efficiency and improving the sustainability of the machining.

Machine protection is a target value relating to the safety requirement. It includes the requirements of protecting the machine elements of the machine tool, such as axes, spindle. It also includes the requirements of protecting the machining tool and the workpiece. For example, machine spindle protection offers safety functions against overloading the machine while machining. The machine parameters can influence the load of the machine element. For example, a high cutting force can cause an overload of the axes of the machine tool and generate a damage. Thus, if the machine protection has a high priority, the machine parameters must be selected in a way that the machine elements are not overloaded. If the machining time has a high priority and the machine protection has a low priority, the machine parameters determined can be more aggressive to allow a fast machining and take into the account of the risk of damaging the machine elements or the machining tool.

Production costs is directed to the costs required to machining a workpiece. For example, it includes the costs of the machining tool and costs of the workpiece material, the amortization of the machine tool.

Quite often, the custom desires a continues machining without interruption. Thus, the reliability of the machining can also be a target value.

Energy saving is getting more and more important for the production. Thus, adding the energy saving as a target value allows the custom to optimize the energy consumption. Certainly, this factor influences the production costs as well. However, it has also an impact on the sustainability of the production, which can be a requirement for the machine users.

The job attributes are used in addition to the target values for further optimizing the tuning of the machine parameters, machine cycles and the ancillary control parameters. Job attributes can be for example the workpiece weight or its mass inertia or the contour complexity.

In a preferred variant, the method comprises providing machining step information as the input data to the extended operator support system, in particular the machining step information comprises roughing, semi-finishing and finishing.

Different machining steps may require different machine parameters, and/or cycle parameters and/or ancillary parameters. Moreover, the method of the present invention allows the operator to select different machining steps. By this way, the machine tuning can be optimized also for different machining steps.

By applying the method of the present invention, the machine parameters can be automatically determined. A machine parameter is a setting used by the primary control unit in order to tune the dynamic behavior and the configuration of the machine. The primary control unit includes the numerical controller (NC) installed in the machine tool. The primary control unit may further comprise a Programmable Logic Controller (PLC) installed in the machine tool. The NC serves to control mainly the axis movements and PLC is mainly responsible for controlling the peripheral devices of the machine tool such as coolant, doors, tool changer and workpiece changer.

Examples for machine parameters are the path tolerance defining the maximum deviation of the actual contour from the rated contour, the minimum feed rate for contouring, the cut-off frequency for the commended position filter etc. These machine parameters and their interaction and dependency are often difficult to understand for an operator of a machine tool. Therefore, the method of the preferred embodiments replaces the difficult task to set and optimize the machine parameters by a more user-friendly means by selecting priority values for a relatively small set of target values representing the basic machine performance and machining properties. The automatically determined machine parameters can then be applied to the primary control unit of the machine tool.

The machine parameters are automatically determined by mapping the selected priority values onto the machine parameters by using a database. In this database the best configuration of the machine parameters for a given priority of the target values is stored. These predefined values for the machine parameters may be determined by previous tests, experience or expert knowledge. Other possibilities to obtain the best possible configuration of the machine parameters for a given selection of priority values for the target values are by interpolation of known configurations of machine parameters, by explicitly calculating the machine parameters based on models representing the physics of the machine tool, or by some kind of learning procedure based on previous machining parameters and on feedback loops from measurements of the actual machining parameters.

One preferred way of implementing such a database is to store a table containing for all possible priority selections predefined values of the machine parameters.

Additionally, by applying the method of the present invention the cycle parameters can be automatically determined. Modern machine tools dispose a series of so-called machine cycles. A machine cycle is a predefined procedure executed by the primary control unit in order to achieve a certain effect. A typical example of such a machine cycle is to dwell at program spindle speed for temperature settlement after a tool change. Therefore, in order to take fully advantage of the capability of the machine tool, specific automatic cycles are executed as a function of the priority of the target values. This means that based on the selected priority values the method automatically determines whether specific machine cycles are activated or deactivated.

Particularly, by applying the method of the present invention the ancillary module parameters can be automatically determined. These days, in order to further optimize the machining process, multiple so-called ancillary modules and sensing devices are integrated or combined with the machine tool to support the machining. Such ancillary machine modules are not controlled by the primary control unit but by an ancillary control unit. The ancillary control unit is implemented at the outside of the primary control unit but can communicate with the primary control unit and/or sensing units. The ancillary modules provide functionalities for supporting improvement of a machining result, e.g., accuracy, or improvement of protection of the machine tool, workpiece, and the machining tool. The ancillary modules can provide a series of extended functions, for example the machining process monitoring, collision protection and active vibration control. In particular, the ancillary modules can also provide the functions to compensate the errors caused due to thermal effect, geometric precision limitation such as: thermal error compensation, geometric error compensation, and table load compensation. The ancillary modules are not the machine cycles.

The method of the present invention can automatically determine ancillary module parameters, which are applied for the ancillary modules. The ancillary module parameters differ from the machine parameters and the cycle parameters. The machine parameters and the cycle parameters are the essential parameters for machining and must be fed into the primary control unit to enable the machine tool to perform the machining. The ancillary module parameters are applied to the ancillary modules, which provides the support functions of the machining. The ancillary modules are configured to enhance the basic capabilities of the machine tool.

In one variant, the ancillary module is a machining process monitoring module which is configured to elaborate a diagnosis of the currently running machining process. Preferably, this module is configured to inform the users about the critical situation, determine an action to be taken against the critical situations and to activate the actions. This module provides the advantage of preventing a damage of the machine tool, the workpiece and the cutting tool.

For example, the process monitoring module is aimed to act as a protection system. The diagnosis and the strategy determined by the machining process monitoring module depend on which component the user wants to protect first. Thus, in addition to the weighting between accuracy, surface finish and machining time, the user can also specify the emphasis on for example the tool protection, machine element protection or part protection. This is achieved by including the tool protection, the machine element protection or the part protection into the target value.

In further, depending on the machining steps including roughing, semi-finishing, and finishing as well as the priorities of the user regarding the accuracy, surface finish, machining time, the criticality of a situation might be different. For instance, vibration left on the surface finish during a roughing operation is normally not detrimental for the quality of the final part, but such vibration marks might be critical when occurring during finishing because they might need to be removed by costly manually polishing. Thus, the ancillary module parameters determining the identification of a critical situation and the strategy to react against it depend on the machining type and the priority values and can be automatically determined by the extended operator support unit.

In another variant, the ancillary module is configured to enhance the thermal error compensation. The ancillary parameters applied for this module are such parameters influencing the thermal behavior and/or thermal compensation of the machine. For example, if the priority value of the accuracy is high in a finishing operation, which normally requires lower spindle torque, the power of the spindle motor should be choked to ensure less heat generation and thus enable a higher accuracy of the machining. In further, the coolant conditions can be restricted to enable more accurate compensation and the duration of warmup phases are adapted. Thus, the extended operator support units determine the ancillary parameters such as the thermal compensation parameters.

In further, the ancillary module configured for thermal error compensation is configured to receive also the temperatures at different locations of the machine tool measured by the temperature sensors as sensing unit, displacements of the machine tool such as axial extension of spindle as input information to perform the thermal compensation.

In one embodiment, the ancillary module is applied for table load compensation. It is configured to adapt a machine kinematic model to compensate structural deviations induced by heavy parts.

The extended operator support system is configured to determine the machine kinematic parameters as ancillary module parameters based on the job attribute value selected by the operator or automatically determined.

The machine kinematic model is stored in the primary control unit. The ancillary module is configured to determine the weight on the worktable based on the information received from the sensing unit such as a force sensor or the force/torque generated by the axes. This information is transmitted from the ancillary module to the automatic tuning unit which automatically determine the job attribute and send it to the extended operator support system. Based on the priority value and the job attribute, the extended operator support system is configured to determine the parameters applied for the kinematic model. These parameters are first transmitted to the ancillary module and fed into the primary control unit further to compensate the structural deviations.

The ancillary module is configured to receive the force/torque generated by the axes to automatically identify weight and inertia moment of the machine table having the part loaded thereon. A sensing unit can provide the information related to loading of the table to the ancillary module by using for example strain gauges and piezo-ceramic sensing element. Based on the input provided by the ancillary module and the sensing unit, the job attribute for example the weight of the part can be automatically determined by the automatic tuning unit. The operator does not need to manually select this job attribute.

In one variant, the ancillary module is applied for collision detection. It is configured to prevent the collision by identifying geometry of the tool and the workpiece clamped in the machining area, creating geometrical model and predicting risk of collision by for example analyzing programmed axis displacements.

In another variant, the ancillary module is applied for geometric error compensation.

Preferably, the steps of automatically determining the ancillary module parameters comprises mapping the selected priority values onto the ancillary module parameters by using a database, or a structured file system. In this database the best configuration of the ancillary module parameters for a given priority of the target values is stored. These predefined values for the ancillary module parameters may be determined by previous tests, experience or expert knowledge. Other possibilities to obtain the best possible configuration of the ancillary module parameters for a given selection of priority values for the target values are by interpolation of known configurations of ancillary module parameters, by explicitly calculating the ancillary module parameters based on models representing the physics of the machine tool, or by some kind of learning procedure based on previous ancillary control parameters and on feedback loops from measurements of the actual ancillary module parameters.

One preferred way of implementing such a database is to store a table containing for all possible priority selections predefined values of the ancillary module parameters.

Moreover, the method further comprises displaying the determined ancillary module parameters on the machine tool.

In some embodiments, the priority value is automatically determined. For example, the priority value is automatically set to surface finish if the ancillary module automatically detects that the current machining step is a finishing operation.

In one variant, the priority value is automatically determined based on the information delivered by the ancillary modules.

In another variant, the priority value is automatically determined based on the information delivered by the sensing devices.

In a further variant, the priority value is automatically determined based on the information delivered by the primary control unit.

In one variant, the priority value is automatically determined based on the job attribute and/or machining steps.

In particular, the priority value is automatically determined based on a database, a physical model, calculation and machine learning.

Automatic identification of the priority values can further improve the support for the operator to determine the optimum parameters applied for the machining. Moreover, it can utilize the full performance of the machine.

In some embodiments, the job attribute is automatically identified. For example, the weight of the part can be automatically determined by the ancillary module and this information is input into the extended operator support system.

In one variant, the job attribute is automatically determined based on the information delivered by the ancillary modules.

In another variant, the job attribute is automatically determined based on the information delivered by the sensing devices.

In a further variant, the job attribute is automatically determined based on the information delivered by the primary control unit.

In one variant, the job attribute is automatically determined based on the priority value and/or machining steps.

In particular, the job attribute is automatically determined based on a database, a physical model, calculation and machine learning.

In an advantageous variant, the machining steps can be automatically determined. For example, the ancillary module by monitoring the movements of the axes and the spindle torque is able to differentiate between roughing or finishing machining steps.

In one variant, the machining steps is automatically determined based on the information delivered by the ancillary modules.

In another variant, the machining steps is automatically determined based on the information delivered by the sensing devices.

In a further variant, the machining steps is automatically determined based on the information delivered by the primary control unit.

In particular, the machining steps is automatically determined based on a database, a physical model, calculation and machine learning.

In some embodiments, the priority values and/or the job attribute and/or the machining steps are defined manually by the operator and automatically verified based on the information provided by primary control unit and/or ancillary control unit and/or sensing units.

In some embodiments, the priority values and/or the job attribute and/or the machining steps are defined manually by the operator and automatically adjusted based on the information provided by primary control unit and/or ancillary control unit and/or sensing units.

The essential element to determine the machine parameters, cycle parameters and the ancillary control parameters is the extended operator support system. The system enables the selection of the optimum machine settings to meet the machine specifications including the target values, job attributes.

The present invention is related to an extended operator support unit for generating parameters relating to operations for machining of a workpiece by a machine tool and meeting at least one required machining specifications. The extended operator support unit comprises an input interface configured to receive priority values for at least two mutually dependent target values representing the machining performance comprising accuracy, surface finish, and the machining time. The extended operator support unit is further configured to receive at least one of the job attributes comprising complexity, mass inertia and workpiece weight. In particular, the target values include production costs, machine protection and energy saving. The extended operator support unit also includes a processing unit configured to automatically determine cycle parameters, machine parameters and the ancillary control parameters based on the selected priority values and the identified job attributes, wherein the machine parameters and cycle parameters are applied for a primary control unit configured to control the machining and the ancillary control parameters are applied for an ancillary control unit, which is configured to control the operations for supporting the machining.

The machine tool is controlled by means of the primary control unit in a manner such that the optimum machining parameter may be determined by an operator having neither special programming skills nor specific knowledge thanks to the extended operator support unit. All technical variables related to the given machine tool, the workpiece like machining steps, target values and the job attributes are taken into account.

In some embodiments, the extended operator support unit comprises an automatic tuning module configured to automatically determine at least one job attribute.

Additionally, the automatic tuning module is configured to automatically determine the machining step.

In an advantageous variant, the automatic tuning module is configured to automatically determine the priority value.

The present invention is also related to a system for machining a workpiece, which comprise a primary control unit, a plurality of ancillary modules, an extended operator support system and an automatic tuning unit.

The machine tool includes a spindle for mounting a machining tool to interact with the workpiece for machining.

The plurality of sensing unit is configured to sense one or more of the following to parameters to provide sensing data: temperature sensors, vibration sensors, force sensors.

The ancillary control unit is configured to be able to receive the sensing data to control the ancillary module.

In additional, the ancillary control unit is able to provide the information required to automatically determine the priority value, the job attribute and the machining steps.

### BRIEF DESCRIPTION OF THE DRAWINGS

A more particular description of the principles briefly described above will be rendered in the following by reference to specific embodiments thereof, which are illustrated in the drawings. These drawings illustrate exemplary embodiments of the disclosure and are not therefore to be considered to limit its scope. The principles of the disclosure are described and explained with details through the use of the accompanying drawings in which:
- Fig. 1:: illustrate a schematic view showing the connection of extended operator support system, automatic tuning unit and ancillary modules; and
- Fig.2:: illustrates a schematic view showing the connection of the extended operator support system, automatic tuning unit and the sensing unit.

### EXEMPLARY EMBODIMENTS

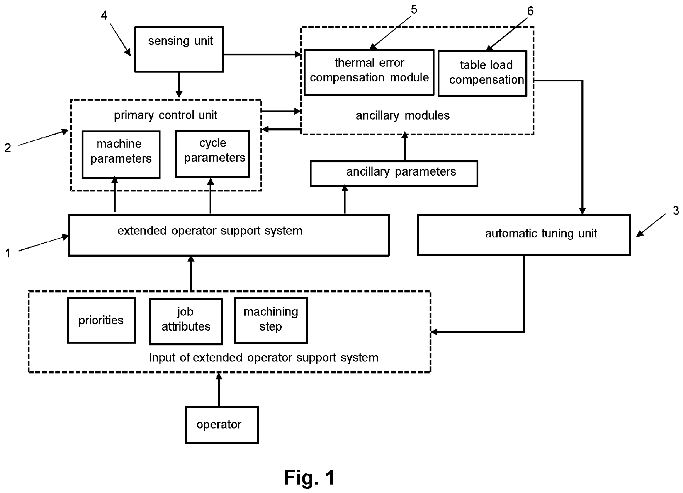

Figure 1 shows a schematic view showing the connection of extended operator support system, automatic tuning unit and the ancillary modules. The input data of the extended operator support system 1 are priority values, job attributes and the machining step. The output data of the extended operator support system includes the machine parameters, cycle parameters and the ancillary parameters.

The priority values, the job attributes, and the machining step can be provided manually by an operator or determined by an automatic tuning unit 3. The machine parameters and the cycle parameters are applied for the primary control unit 2 of the machine tool and the ancillary parameters are essential data required by the ancillary modules. In the figure 1, two ancillary modules are shown. However, besides the thermal error compensation module 5 and the table load compensation module 6 other ancillary modules are also applicable.

A sensing unit including a plurality of sensors is also connected to the primary control unit and the ancillary modules to deliver different sensor data. The automatic tuning unit can automatically determine the priority value, job attributes and the machining step based on the data provided by the ancillary modules.

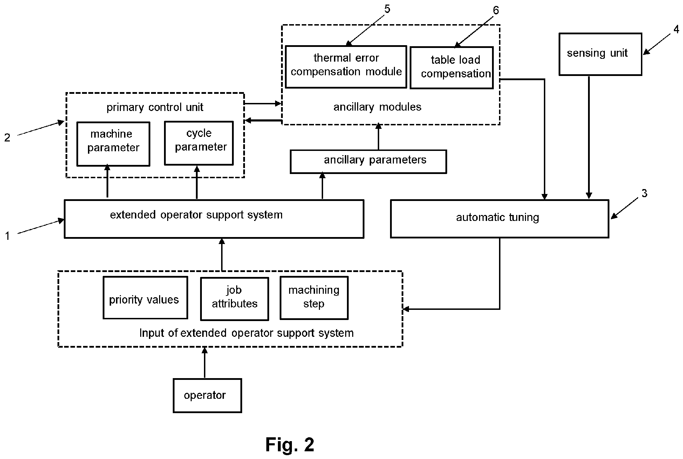

The figure 2 shows an embodiment, that the sensing unit can also directly communicate the sensor data to the automatic tuning unit for determining the input data of the extended operator support system.

### Reference list

- 1: extended operator support system
- 2: primary control unit
- 3: automatic tuning unit
- 4: sensing unit
- 5: thermal error compensation module
- 6: table load compensation module

## Claims

1. A method for generating parameters applied for machining operations conducted by a machine tool comprising:
a. providing priority values for at least two mutually dependent target values representing the machining performance comprising accuracy, surface finish, machining time as input data to an extended operator support system (1), wherein at least one priority value is automatically determined by an automatic tuning unit (3);
b. providing at least one of job attributes comprising complexity and workpiece weight as input data to the extended operator support system;
c. automatically determining cycle parameters, machine parameters and the ancillary module parameters as output data of the extended operator support system based on the priority values and the job attributes by the extended operator support system, wherein the machine parameters and cycle parameters are applied for a primary control unit (2) configured to control the movement of the different axes to perform the machining and the ancillary module parameters are applied for a plurality of ancillary modules which are configured to conduct the operations for supporting the machining.

2. The method according to claim 1, wherein the method comprises providing machining step information as the input data to the extended operator support system, in particular the machining step information comprises roughing, semi-finishing and finishing.

3. The method according to claim 1 or 2, wherein the priority value is automatically determined based on the information provided by the ancillary module, in particular the automatically determined priority value is automatically transmitted from the automatic tuning unit to the extended operator support system.

4. The method according to one of claims 1 to 3, wherein at least one job attribute is automatically determined by the automatic tuning unit, in particular the automatically determined job attribute is automatically transmitted from the automatic tuning unit to the extended operator support system.

5. The method according to claim 4, wherein the weight of the workpiece is determined by the ancillary module based on the information provided by a sensing unit mounted on the machine tool.

6. The method according to one of claims 2 to 4, wherein the machining step information is automatically determined by the automatic tuning module, in particular the automatically determined machining step information is automatically transmitted from the automatic tuning unit to the extended operator support system.

7. The method according to one of claims 1 to 6, wherein the steps of automatically determining the ancillary control parameters comprises mapping the provided priority values onto the ancillary module parameters by using a database, or a structured file system, in particular the data base comprises a predefined table.

8. The method according to one of claims 1 to 7, wherein the method further comprises displaying the determined ancillary module parameters on the machine tool.

9. A system for generating parameters applied for machining operations conducted by a machine tool comprising:
a. a primary control unit (2) configured to control the machining;
b. a plurality of ancillary modules configured to conduct the operations for supporting the machining;
c. an extended operator support system (1) configured to receive priority values for at least two mutually dependent target values and at least one of job attributes and to automatically determine cycles parameters, machine parameters and the ancillary module parameters based on the received priority values and the job attributes, wherein the target values represent the machining performance comprising accuracy, surface finish, machining time and the job attributes comprises complexity and workpiece weight, and wherein the machine parameters and cycle parameters are applied for the primary control unit and the ancillary module parameters are applied for the ancillary modules;
d. an automatic tuning unit (3) configured to automatically determine at least one priority value.

10. The system according to claim 9, wherein the automatic tuning module is configured to automatically determine at least one job attribute.

11. The system according to claim 9 or 10, wherein the automatic tuning module is configured to automatically determine the machining steps.

12. The system according to one of claims 9 to 11, wherein the system includes a plurality of sensing units for providing the sensor data to the ancillary modules.
